# EUROPEAN PATENT APPLICATION

(11) **EP 4 488 038 A1**
(43) Date of publication of application: **08.01.2025**
(21) Application number: 23762686.6
(22) Date of filing: 18.01.2023
(51) Int. Cl.: B29C 64/386, B33Y 50/00, B29C 64/393, B33Y 50/02

(54) **MODEL GENERATION METHOD AND APPARATUS, AND DEVICE AND STORAGE MEDIUM**

(30) Priority: 03.03.2022 CN 202210200836
(71) Applicant: Shenzhen Creality 3D Technology Co., Ltd., Shenzhen, Guangdong 518110 (CN)
(72) Inventor: TANG, Jingke, Shenzhen, Guangdong 518110 (CN); GAO, Junxiao, Shenzhen, Guangdong 518110 (CN)
(74) Representative: Zaboliene, Reda
(86) International application number: PCT/CN2023/073006
(87) International publication number: WO 2023/165285

(57) **Abstract**

The present application relates to a model generation method and apparatus, and a device and a storage medium. The method comprises:A model generation method includes: obtaining sliced text data; obtaining geometric vertex data according to the sliced text data; determining a geometric object according to the geometric vertex data and a preset geometric object parameter; and rendering the geometric object by using a custom material to generate a to-be-printed model. By adopting the method, coordinates of geometric vertexes are extracted from the sliced text data, the geometric object is determined only according to the coordinates of the geometric vertex, and then the geometric object is rendered to generate the model. There is no need to transmit all slice text data to a printer, and there is no need to configure a configuration device, which can accommodate and parse all the slice text data, for the corresponding printer, thereby reducing the cost of the printer. Moreover, since there is a large amount of invalid information in the slice text data, only valid geometric vertex data is needed for subsequent model construction in the present application, thereby reducing the amount of data transmission.

## Description

### FIELD

The present application relates to the technical field of 3D printing, and in particular, to a model generation method, apparatus, and device, and a storage medium.

### BACKGROUND

Driven by intelligent computing and digital technologies, 3D printing technology is increasingly applied in a wide range of fields. In addition, 3D printers are gradually emerging. The current 3D printing technology can slice an as-built 3D model directly using slicing software to generate a to-be-printed Gcode file, and then the Gcode file is directly pushed to a 3D printer so that the 3D printer prints according to the content of the Gcode file. However, a large data size of Gcode file results in a high cost for the printer.

### SUMMARY OF DISCLOSRE

In view of the foregoing, it is necessary to provide a model generation method, apparatus, and device, and a storage medium capable of compressing the data size of a Gcode file and reducing the cost of a printer.

In a first aspect, the model generation method includes: obtaining sliced text data; obtaining geometric vertex data according to the sliced text data; determining a geometric object according to the geometric vertex data and a preset geometric object parameter; and rendering the geometric object by using a custom material to generate a to-be-printed model.

In one embodiment, obtaining the geometric vertex data according to the sliced text data includes: parsing the sliced text data according to a preset parsing algorithm to obtain a plurality of pieces of instruction data in the sliced text data; and obtaining the geometric vertex data according to the plurality of pieces of instruction data.
In one embodiment, the method further includes: filtering invalid instruction data in the plurality of pieces of instruction data to obtain valid instruction data; and obtaining the geometric vertex data according to the plurality of pieces of instruction data includes: obtaining the geometric vertex data according to the valid instruction data.

**In** one embodiment, the method further includes: determining whether the instruction data meets a preset invalid condition; and determining that the instruction data is the invalid instruction data if the preset invalid condition is met, or determining that the instruction data is the valid instruction data if the preset invalid condition is not met.

In one embodiment, the invalid condition includes at least one of the following: determining that an extrusion output of a printer is zero according to the instruction data; and determining that an offset of the printer is zero according to the instruction data.

**In** one embodiment, obtaining the geometric vertex data according to the plurality of pieces of instruction data includes: obtaining a plurality of vertex values according to the plurality of pieces of instruction data; and constructing coordinates of geometric vertexes according to the vertex values to obtain the geometric vertex data.

**In** one embodiment, the preset geometric object parameter includes preset color data and/or preset transparency value data.

In one embodiment, the method further includes: obtaining preset line width data; and determining the custom material according to the line width data.

In a second aspect, the present application further provides a model generation apparatus, including: a first obtaining module, configured to obtain sliced text data; a second obtaining module, configured to obtain geometric vertex data according to the sliced text data; a determination module, configured to determine a geometric object according to the geometric vertex data and a preset geometric object parameter; and a generation module, configured to render the geometric object by using a custom material to generate a to-be-printed model.

In a third aspect, the present application further provides a computer device, including a memory and a processor, where the memory stores a computer program, and when the processor executes the computer program, the steps of the method in any one of the embodiments of the first aspect described above are implemented.

In a fourth aspect, the present application further provides a computer-readable storage medium with a computer program stored thereon, and when the computer program is executed by a processor, the steps of the method in any one of the embodiments of the first aspect described above are implemented. For the model generation method, apparatus, device, and the storage medium described above, by obtaining the sliced text data, and determining the geometric object according to the geometric vertex data and the preset geometric object parameter; then the geometric object is rendered by using the custom material to generate the to-be-printed model. Coordinates of a geometric vertex are extracted from the sliced text data, the geometric object is determined only according to the coordinates of the geometric vertex, and then the geometric object is rendered to generate the model. It is not necessary to transmit all of the sliced text data to a printer, and the corresponding printer does not need to be configured with a configuration device capable of accommodating and parsing all of the sliced text data, thereby reducing the cost for the printer. In addition, as a large amount of invalid information exists in the sliced text data, in the present application, only valid geometric vertex data needs to be subjected to subsequent model building, thereby reducing the amount of data to be transmitted. Moreover, a to-be-printed model convenient for a user to intuitively observe is capable of being built according to actually sliced data, thereby facilitating the user to browse the printing progress in real time.

### BRIEF DESCRIPTION OF DRAWINGS

FIG. 1 is an internal structural diagram of a computer device provided by one or more embodiments;
FIG. 2 is a first schematic flowchart of a model generation method provided by one or more embodiments;
FIG. 3 is a second schematic flowchart of a model generation method provided by one or more embodiments;
FIG. 4 is a third schematic flowchart of a model generation method provided by one or more embodiments;
FIG. 5 is a fourth schematic flowchart of a model generation method provided by one or more embodiments;
FIG. 6 is a fifth schematic flowchart of a model generation method provided by one or more embodiments;
FIG. 7 is a sixth schematic flowchart of a model generation method provided by one or more embodiments; and
FIG. 8 is a structural block diagram of a model generation apparatus provided by one or more embodiments.

### DETAILED DESCRIPTION

To make the objectives, technical solutions, and advantages of the present application more comprehensible, the present application will be further described in detail with reference to the accompanying drawings and embodiments. It should be understood that the embodiments described herein are only intended to explain rather than limit the present application.

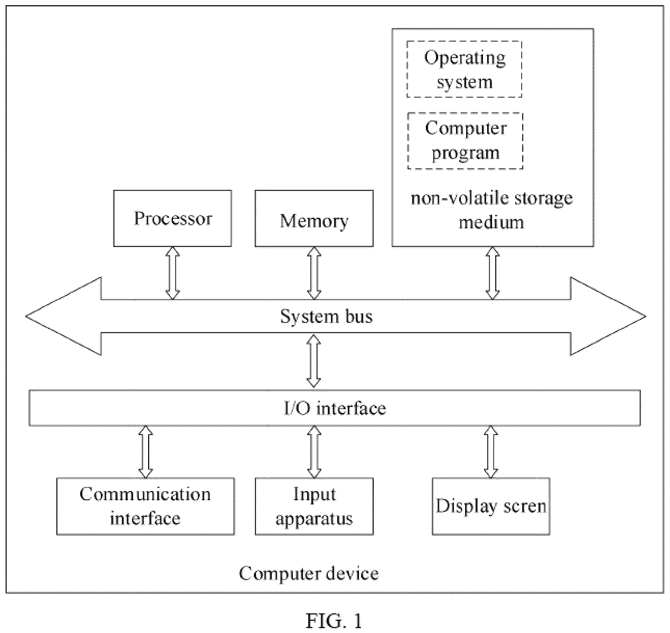

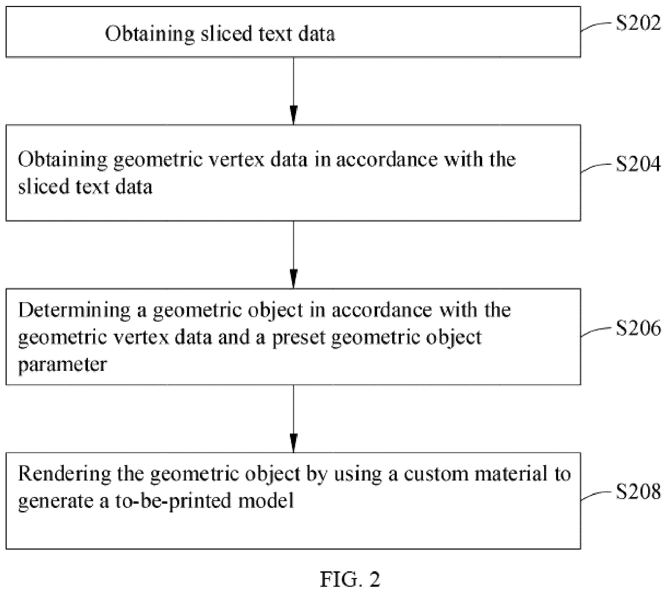

In one embodiment, a model generation method is provided, and the method is applied to a computer device shown in FIG. 1 for illustration. It can be understood that the method may be applied to a server, or may be applied to a system including a terminal and a server, and is implemented by means of interaction between the terminal and the server. In one embodiment, as shown in FIG. 2, the model generation method includes:
S202: obtaining sliced text data.

Specifically, when a user performs 3D modeling on a to-be-printed article based on third-party mapping software, an original 3D model in a plane form is generated, and then the original 3D model can be sliced by using printing slicer software to generate sliced text data, that is, the sliced text data is obtained. The third-party mapping software can include: AutoCAD software, 3dmax software, Rhino software, LightWave3D software, and the like, and is not limited herein. The printing slicer software can include: cura software, simplify3D software, UP software, and the like, and is not limited herein. The sliced text data can include Gcode text data and the like.

S204: obtaining geometric vertex data according to the sliced text data.

Specifically, the sliced text data can be parsed according to a preset parsing algorithm, and the geometric vertex data of the model is extracted from the sliced text data. The preset parsing algorithm can include a linear algorithm, a trigonometric function algorithm, and the like, and is not limited herein. The Gcode text data is used as an example of the sliced text data and includes a variety of instruction data. Each instruction is parsed to determine each piece of valid vertex coordinate data in each layer of the to-be-printed model as the geometric vertex data. The Gcode text data can include: G - for motion and position control, T - control tool, M - some auxiliary commands, X - change on the x-axis, Y - change on the y-axis, E - extrusion output, F - speed of a print head, and the like.

S206: determining a geometric object according to the geometric vertex data and a preset geometric object parameter.

Specifically, after the geometric vertex data is obtained, the geometric object can be determined based on a graphics standard through the geometric vertex data and the preset geometric object parameter.

Exemplary, the preset geometric object parameter can include preset color data and/or preset transparency value data.

Furthermore, the geometric object can be jointly determined through the geometric vertex data, the color data, and the preset transparency value data. The geometric object can also be determined through the geometric vertex data and the color data, which are not limited herein.

After the geometric vertex data is obtained, the number of vertexes of the model can be determined, and color data and transparency value data of each corresponding vertex can be constructed by using the number of vertexes as a known condition. For the construction of color values, a color data array is first created, and then color values of the three primary colors (R/G/B) are stored in the array to obtain color data corresponding to a plurality of vertexes, where the (R/G/B) values range between 0 and 255 and can be customized by a person skilled in the art. For the construction of transparency values, there is only one value (A), which does not affect the construction of the color data. Similarly, a transparency value data array is first created, and then transparency values are successively stored in the transparency value data array corresponding to the vertex data, where the transparency values range between 0 and 1 and can be customized by a person skilled in the art. The transparency values can be introduced by changing the light and shadow of the model to create a more stereoscopic effect.

S208: rendering the geometric object by using a custom material to generate a to-be-printed model.

Specifically, the custom material is a custom material of the to-be-printed model that can be determined in advance according to a graphics standard after the geometric vertex data is determined. After the custom material set by a user is directly obtained, the determined geometric object is rendered by using the custom material to generate the to-be-printed model. The custom material can include variables such as illumination data, a model color value, a model normal, and a model vertex. When the custom material of the to-be-printed model is determined according to the graphics standard, the custom material can be determined through a preset algorithm, for example, a shader algorithm, a fragment algorithm, and the like, which is not limited herein.

Exemplary, the rendering manner can be cross-rendering.

Exemplary, after the to-be-printed model is generated, the to-be-printed model can be directly previewed and transmitted to a printer for printing.

For the model generation method described above, the sliced text data is obtained. Then the geometric vertex data is obtained according to the sliced text data; and then the geometric object is determined according to the geometric vertex data and the preset geometric object parameter. Finally, the geometric object is rendered by using the custom material to generate the to-be-printed model. The coordinates of geometric vertexes are extracted from the sliced text data, the geometric object is determined only according to the coordinates of the geometric vertex, and then the geometric object is rendered to generate the model. It is not necessary to transmit all of the sliced text data to a printer, and the corresponding printer does not need to be configured with a configuration device capable of accommodating and parsing all of the sliced text data, thereby reducing the cost for the printer. In addition, as a large amount of invalid information exists in the sliced text data, in the present application, only valid geometric vertex data needs to be subjected to subsequent model building, thereby reducing the amount of data to be transmitted. Moreover, a to-be-printed model convenient for a user to intuitively observe is capable of being built according to actually sliced data, hereby facilitating the user to browse the printing progress.

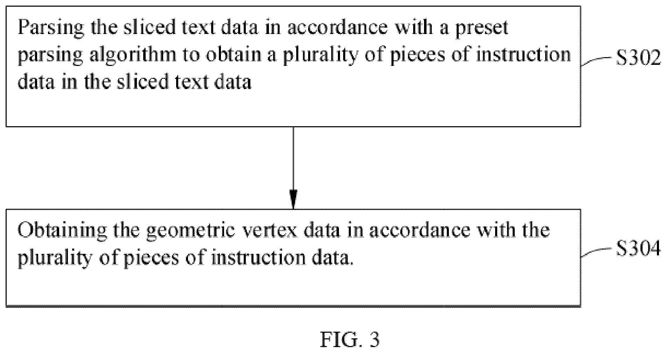

The above embodiment describes the model generation method and how to obtain the geometric vertex data is described below with an embodiment. In one embodiment, as shown in FIG. 3, the obtaining geometric vertex data according to the sliced text data includes:
S302: parsing the sliced text data according to a preset parsing algorithm to obtain a plurality of pieces of instruction data in the sliced text data; and
S304: obtaining the geometric vertex data according to the plurality of pieces of instruction data.

Exemplary, the sliced text data is Gcode text data. Several common instructions in the Gcode text data can be shown in Table 1.

**Table 1**

| Instruction Name | Instruction Function |
|---|---|
| G0 | Rapid move |
| G1 | Controlled move |
| G90 | Set to relative position |
| G91 | Set position |
| E | Extruder, indicating the extrusion output |
| F | Speed, indicating the movement speed also affects the extrusion speed |

Specifically, a Z value in each instruction in the Gcode text data can be extracted according to the preset parsing algorithm. For example, a G1 instruction can be G1X90.6Y13.8Z1E22.4, where Z is 1. In this case, the geometric object corresponds to the first layer, X and Y represent moving from the origin of coordinates of this layer to a position with coordinates of (90.6, 13.8), and E represents an extrusion output of 22.4, then the coordinates of the geometric vertex extracted correspondingly can be (90.6, 13.8, 1). The number of layers of the geometric object can be determined according to Z values in different instructions. Then coordinate value data in each instruction is extracted according to an order of the number of layers. and the geometric vertex data is determined. Finally, a data set of geometric vertex data is generated in hierarchical order.

In one embodiment, the plurality of pieces of instruction data in the sliced text data is obtained by parsing the sliced text data according to the preset parsing algorithm. The geometric vertex data is obtained according to the plurality of pieces of instruction data. The coordinates of the geometric vertex can be extracted in the Gcode text data so that the to-be-printed model is generated subsequently according to the coordinates of the geometric vertex, and the amount of data transmitted to a printer is reduced, thereby reducing the configuration cost for the printer.

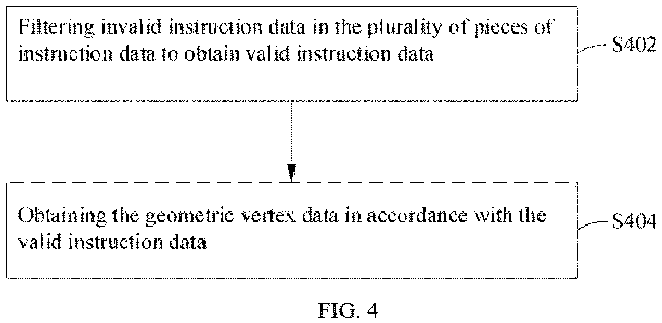

The above embodiment describes the model generation method. When the model is generated, the geometric vertex data needs to be extracted. How to extract the geometric vertex data is further described below with an embodiment. In one embodiment, as shown in FIG. 4, the model generation method further includes:
S402: filtering invalid instruction data in the plurality of pieces of instruction data to obtain valid instruction data.

Specifically, the Gcode text data includes a large amount of instruction information, among which, however, some instruction information that occupies a part of amount is invalid instructions. Therefore, the invalid instructions need to be filtered. Spaces and garbage characters in the instruction data can be filtered. Abnormal data in the instruction data can also be filtered, to obtain the valid instruction data.

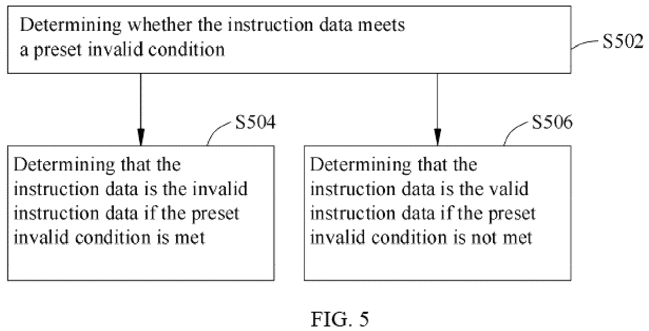

In one embodiment, as shown in FIG. 5, the model generation method further includes:
S502: determining whether the instruction data meets a preset invalid condition.
S504: determining that the instruction data is the invalid instruction data if the preset invalid condition is met.
S506: determining that the instruction data is the valid instruction data if the preset invalid condition is not met.

The invalid condition includes at least one of the following:
determining that an extrusion output of a printer is zero according to the instruction data; and
determining that an offset of the printer is zero according to the instruction data.

For example, among numerous instructions in the Gcode text data, coordinates that start with G0 and G1 are mainly extracted, and the two instructions are used as major conditions. F and E are used as auxiliary conditions for determining whether the printer is actually performing extrusion, and G92 is used for determining the start point of a model printing position. After these conditions are extracted, the coordinate values (X, Y, Z) are extracted from the segmented G data by using a trigonometric function. Taking G0X12 as an example, this command moves a distance of X = 12 mm. In fact, for RepRap, the effect of this command is the same as that of G1X12. Taking G1X90.6Y13.8E22.4 as an example, the current start point (X, Y) in the G92 instruction moves to the destination point (90.6, 13.8), and a 22.4-mm printing filament is extruded in the traveling process, that is, the extrusion output is 22.4 mm, where the extrusion command is controlled by E22.4.

Specifically, whether the printer is performing extrusion and the offset values of x,y coordinates in each instruction in the extrusion process can be determined by comparing changes of the E value in the instruction. Among the offset values of x,y coordinates with the same Z value, a difference operation is performed on the offset values of x,y coordinates in the subsequent instruction with the offset values of x,y coordinates in the previous instruction, to obtain a corresponding offset. When the offset exists or the extrusion output is greater than 0, it indicates that the printer works normally. Otherwise, the printing is invalid, and the corresponding coordinates are also invalid. Exemplary, the start points of the coordinates can also be determined through G92, generally starting from 0. For example, E0 represents that the E value returns to 0, and according to the above conditions and selection logic, the geometric vertex data can be extracted.

The obtaining the geometric vertex data according to the plurality of pieces of instruction data includes:
S404: obtaining the geometric vertex data according to the valid instruction data.

Specifically, according to the filtered valid instruction data, coordinate value data in the valid instruction data is extracted to obtain geometric vertex data corresponding to each level.

The invalid instruction data in the plurality of pieces of instruction data is filtered to obtain the valid instruction data, and the geometric vertex data is obtained according to the valid instruction data, which can effectively filter the invalid data and extract the valid data to construct several objects.

The above embodiment describes how to filter the invalid instruction data, and how to obtain the geometric vertex data is further described below with an embodiment.

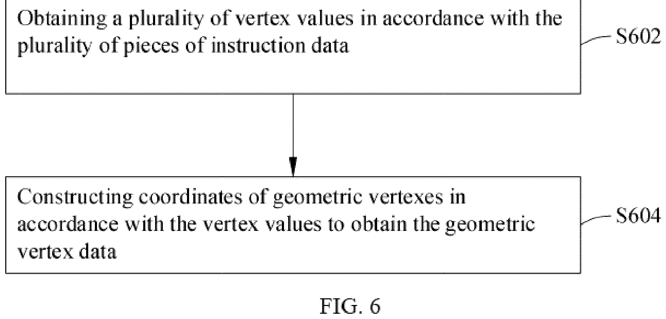

In one embodiment, as shown in FIG. 6, the obtaining the geometric vertex data according to the plurality of pieces of instruction data includes:
S602: obtaining a plurality of vertex values according to the plurality of pieces of instruction data.

Specifically, after the Gcode text data is obtained, the plurality of pieces of instruction data can be obtained, and X, Y, and Z values corresponding to each instruction can be extracted, that is, the plurality of vertex values are obtained.

S604: constructing coordinates of a geometric vertex according to the vertex values to obtain the geometric vertex data.

Specifically, after the plurality of vertex values are obtained, those with the same Z value in the instruction are determined to be at the same level. according to an increasing order of the X value, the corresponding X, Y, and Z values are taken as a set, i.e. the coordinates of geometric vertexes. After all the vertex values are filtered, the geometric vertex data of each level in the hierarchical order determined according to the Z value is obtained.

The plurality of vertex values are obtained according to the plurality of pieces of instruction data. The coordinates of the geometric vertex are constructed according to the vertex values to obtain the geometric vertex data, Thus obtaining geometric vertex data of a geometric object from the instruction data, to generate a to-be-printed model subsequently.

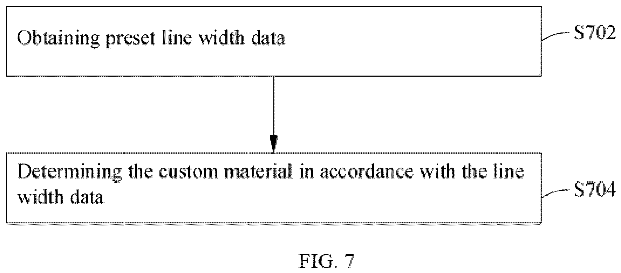

The above embodiment describes the model generation method. In order to achieve a better model generation effect, a line width can be changed, and how to change the line width is described below with one embodiment, as shown in FIG. 7. The model generation method further includes:
S702: obtaining preset line width data; and
S704: determining the custom material according to the line width data.

Specifically, when the custom material is set, the line width data set by a user can be obtained through a third-party interface, and line width variable information in the custom material is changed to determine the custom material. The line width data can be customized by the user, or dynamically changed by using a mouse or a keyboard.

Exemplary, after the model is generated, the change of an angle of view of a camera is obtained according to a position of the camera in a 3D scene and a width-to-depth ratio of a built-in canvas, where the ratio of a width of the canvas to a height of the canvas is the angle of view of the camera. By changing the angle of view and line width data of the camera, the effect can be mapped to a screen, so as to achieve the effect that the line width of the model changes dynamically with the change of the angle of view.

The preset line width data is obtained and the custom material is determined according to the line width data. Thus solving the problem in the prior art that a line width cannot be changed during printing after obtaining Gcode data.

To facilitate the understanding of a person skilled in the art, the model generation method is further described below with an embodiment. In one embodiment, the model generation method further includes:
S801: obtaining sliced text data.
S802: parsing the sliced text data according to a preset parsing algorithm to obtain a plurality of pieces of instruction data in the sliced text data.
S803: filtering invalid instruction data in the plurality of pieces of instruction data to obtain valid instruction data.
S804: determining whether the instruction data meets a preset invalid condition; and the invalid condition includes at least one of the following: determining that an extrusion output of a printer is zero according to the instruction data; and determining that an offset of the printer is zero according to the instruction data.
S805: determining that the instruction data is the invalid instruction data if the preset invalid condition is met.
S806: determining that the instruction data is the valid instruction data if the preset invalid condition is not met.
S807: obtaining a plurality of vertex values according to the plurality of pieces of instruction data.
S808: constructing coordinates of geometric vertexes according to the vertex values to obtain the geometric vertex data.
S809: determining a geometric object according to the geometric vertex data and a preset geometric object parameter, where the preset geometric object parameter includes preset color data and/or preset transparency value data.
S810: obtaining preset line width data.
S811: determining the custom material according to the line width data.
S812: rendering the geometric object by using a custom material to generate a to-be-printed model.

In one embodiment, the sliced text data is obtained. The geometric vertex data is obtained according to the sliced text data. The geometric object is determined according to the geometric vertex data and the preset geometric object parameter; and the geometric object is rendered by using the custom material to generate the to-be-printed model. coordinates of geometric vertexes are extracted from the sliced text data. The geometric object is determined only according to the coordinates of the geometric vertex, and then the geometric object is rendered to generate the model. Not all of the sliced text data need to be transmitted to a printer, and the corresponding printer does not need to be configured with a configuration device capable of accommodating and parsing all of the sliced text data, thereby reducing the cost for the printer. In addition, as a large amount of invalid information exists in the sliced text data, in the present application, only valid geometric vertex data needs to be subjected to subsequent model building, thereby reducing the amount of data to be transmitted. Moreover, a to-be-printed model convenient for a user to intuitively observe can be built according to actually sliced data, facilitating the user to browse the printing progress.

It should be understood that although the steps in the flowchart involved in the above embodiments are displayed in sequence as indicated by the arrows, these steps are not necessarily performed in sequence as indicated by the arrows. Unless expressly stated herein, these steps are not necessarily performed in a strict order and can be performed in another order. In addition, at least a part of the steps in the flowchart involved in the above embodiments can include a plurality of steps or a plurality of stages. These steps or stages are not necessarily performed at the same time but can be performed at different times. These steps or stages are not necessarily performed in sequence but can be performed in rotation or alternately with other steps or at least a part of steps or stages in the other steps.

Based on the same inventive concept, one embodiment of the present application further provides a model generation apparatus 800 for implementing the model generation method described above. An implementation solution provided by the apparatus 800 for solving the problem is similar to that described in the method described above. Therefore, for a specific limitation in one or more embodiments of the model generation apparatus 800 provided below, reference can be made to the limitation on the model generation method described above, which will not be elaborated herein.

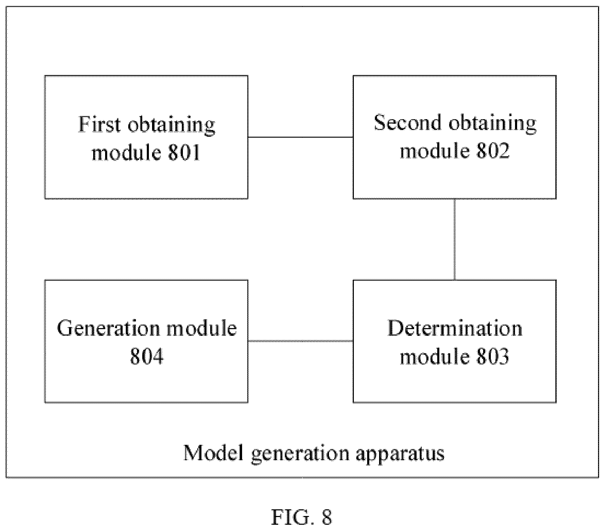

In one embodiment, as shown in FIG. 8, a model generation apparatus 800 is provided, including:
a first obtaining module 801, configured to obtain sliced text data;
a second obtaining module 802, configured to obtain geometric vertex data according to the sliced text data;
a determination module 803, configured to determine a geometric object according to the geometric vertex data and a preset geometric object parameter; and
a generation module 804, configured to render the geometric object by using a custom material to generate a to-be-printed model.

Exemplary, the preset geometric object parameter includes preset color data and/or preset transparency value data.

In one embodiment, the first obtaining module obtains the sliced text data. The second obtaining module obtains the geometric vertex data according to the sliced text data. The determination module determines the geometric object according to the geometric vertex data and the preset geometric object parameter. The generation module renders the geometric object by using the custom material to generate the to-be-printed model. Coordinates of geometric vertexes are extracted from the sliced text data, and the geometric object is determined only according to the coordinates of the geometric vertex. Then the geometric object is rendered to generate the model. Not all of the sliced text data needs to be transmitted to a printer, and the corresponding printer does not need to be configured with a configuration device capable of accommodating and parsing all of the sliced text data, thereby reducing the cost for the printer. In addition, as a large amount of invalid information exists in the sliced text data, in the present application, only valid geometric vertex data needs to be subjected to subsequent model building, thereby reducing the amount of data to be transmitted. Moreover, a to-be-printed model convenient for a user to intuitively observe is capable of being built according to actually sliced data, hereby facilitating the user to browse the printing progress.

In one embodiment, the second obtaining module includes:
a parsing unit, configured to parse the sliced text data according to a preset parsing algorithm to obtain a plurality of pieces of instruction data in the sliced text data; and
a first obtaining unit, configured to obtain the geometric vertex data according to the plurality of pieces of instruction data.

**In** one embodiment, the model generation apparatus further includes:
a filtering module, configured to filter invalid instruction data in the plurality of pieces of instruction data to obtain valid instruction data; and
a first obtaining unit, specifically configured to obtain the geometric vertex data according to the valid instruction data.

In one embodiment, the model generation apparatus further includes:
a determination module, configured to determine whether the instruction data meets a preset invalid condition;
a second determination module, configured to determine that the instruction data is the invalid instruction data if the preset invalid condition is met; and
a third determination module, configured to determine that the instruction data is the valid instruction data if the preset invalid condition is not met.

Exemplary, the invalid condition includes at least one of the following: determining that an extrusion output of a printer is zero according to the instruction data; and determining that an offset of the printer is zero according to the instruction data.

**In** one embodiment, the second obtaining module is specifically configured to: obtain a plurality of vertex values according to the plurality of pieces of instruction data; and construct coordinates of a geometric vertex according to the vertex values to obtain the geometric vertex data.

**In** one embodiment, the model generation apparatus further includes:
a third obtaining module, configured to obtain preset line width data; and
a fourth determination module, configured to determine the custom material according to the line width data.

The module in the model generation apparatus described above can be implemented in whole or in part by using software, hardware, and a combination thereof. These modules can be embedded in or independent from a processor in a computer device in a hardware form or can be stored in a memory in the computer device in a software form so that the processor invokes and executes operations corresponding to these modules.

In one embodiment, a computer device is provided. The computer device can be a terminal. The computer device includes a processor, a memory, a communication interface, a display screen, and an input apparatus that are connected through a system bus. The processor of the computer device is configured to provide a computing and control capability. The memory of the computer device includes a non-volatile storage medium and an memory. The non-volatile storage medium stores an operating system and a computer program. The memory provides an environment for running the operating system and the computer program stored in the non-volatile storage medium. The communication interface of the computer device is configured to communicate with an external terminal in a wired or wireless manner. The wireless manner can be implemented by using Wi-Fi, a mobile cellular network, near-field communication (NFC), or another technology. The computer program is executed by the processor to implement a model generation method. The display screen of the computer device can be a liquid crystal display screen or an electronic ink display screen. The input apparatus of the computer device can be a touch layer covered on the display screen, or a key, a trackball, or a touchpad disposed on a housing of the computer device, or an external keyboard, touchpad, or mouse, or the like.

A person skilled in the art can understand that the structure shown in FIG. 1 is only a block diagram of partial structure related to the solution of the present application, and does not constitute a limitation on the computer device to which the solution of the present application is applied. Specifically, the computer device can include more or fewer components than those shown in the figure, or combine some components, or have a different component arrangement.

In one embodiment, a computer device is provided, including a memory and a processor, where the memory stores a computer program, and when the computer program is executed by the processor, the following steps are implemented:
obtaining sliced text data;
obtaining geometric vertex data according to the sliced text data;
determining a geometric object according to the geometric vertex data and a preset geometric object parameter; and
render the geometric object by using a custom material to generate a to-be-printed model.

In one embodiment, when the computer program is executed by the processor, the following steps are further implemented:
the obtaining geometric vertex data according to the sliced text data includes:
parsing the sliced text data according to a preset parsing algorithm to obtain a plurality of pieces of instruction data in the sliced text data, and obtain the geometric vertex data according to the plurality of pieces of instruction data.

In one embodiment, when the computer program is executed by the processor, the following steps are further implemented:
filtering invalid instruction data in the plurality of pieces of instruction data to obtain valid instruction data; and
the obtaining the geometric vertex data according to the plurality of pieces of instruction data includes:
   obtaining the geometric vertex data according to the valid instruction data.

In one embodiment, when the computer program is executed by the processor, the following steps are further implemented:
determining whether the instruction data meets a preset invalid condition; and
determining that the instruction data is the invalid instruction data if the preset invalid condition is met; or
determining that the instruction data is the valid instruction data if the preset invalid condition is not met.

In one embodiment, when the computer program is executed by the processor, the following steps are further implemented:
the invalid condition includes at least one of the following:
determining that an extrusion output of a printer is zero according to the instruction data; and
determining that an offset of the printer is zero according to the instruction data.

In one embodiment, when the computer program is executed by the processor, the following steps are further implemented:
the obtaining the geometric vertex data according to the plurality of pieces of instruction data includes:
obtaining a plurality of vertex values according to the plurality of pieces of instruction data; and
constructing coordinates of geometric vertexes according to the vertex values to obtain the geometric vertex data.

In one embodiment, the preset geometric object parameter includes preset color data and/or preset transparency value data.

In one embodiment, when the computer program is executed by the processor, the following steps are further implemented:
obtaining preset line width data; and
determining the custom material according to the line width data.

In one embodiment, a computer-readable storage medium with a computer program stored thereon is provided, and when the computer program is executed by a processor, the following steps are implemented:
obtaining sliced text data;
obtaining geometric vertex data according to the sliced text data;
determining a geometric object according to the geometric vertex data and a preset geometric object parameter; and
rendering the geometric object by using a custom material to generate a to-be-printed model.

In one embodiment, when the computer program is executed by the processor, the following steps are implemented:
the obtaining geometric vertex data according to the sliced text data includes:
parsing the sliced text data according to a preset parsing algorithm to obtain a plurality of pieces of instruction data in the sliced text data; and
obtaining the geometric vertex data according to the plurality of pieces of instruction data.

In one embodiment, when the computer program is executed by the processor, the following steps are implemented:
filtering invalid instruction data in the plurality of pieces of instruction data to obtain valid instruction data; and
the obtaining the geometric vertex data according to the plurality of pieces of instruction data includes:
   obtaining the geometric vertex data according to the valid instruction data.

In one embodiment, when the computer program is executed by the processor, the following steps are implemented:
determining whether the instruction data meets a preset invalid condition; and
determining that the instruction data is the invalid instruction data if the preset invalid condition is met; or
determining that the instruction data is the valid instruction data if the preset invalid condition is not met.

In one embodiment, when the computer program is executed by the processor, the following steps are implemented:
the invalid condition includes at least one of the following:
determining that an extrusion output of a printer is zero according to the instruction data; and
determining that an offset of the printer is zero according to the instruction data.

In one embodiment, when the computer program is executed by the processor, the following steps are implemented:
the obtaining the geometric vertex data according to the plurality of pieces of instruction data includes:
obtaining a plurality of vertex values according to the plurality of pieces of instruction data; and
constructing coordinates of geometric vertexes according to the vertex values to obtain the geometric vertex data.

In one embodiment, when the computer program is executed by the processor, the following steps are implemented:
the preset geometric object parameter includes preset color data and/or preset transparency value data.

In one embodiment, when the computer program is executed by the processor, the following steps are implemented:
obtaining preset line width data; and
determining the custom material according to the line width data.

In one embodiment, a computer program product is provided, including a computer program, and when the computer program is executed by a processor, the following steps are implemented:
obtaining sliced text data;
obtaining geometric vertex data according to the sliced text data;
determining a geometric object according to the geometric vertex data and a preset geometric object parameter; and
rendering the geometric object by using a custom material to generate a to-be-printed model.

In one embodiment, when the computer program is executed by the processor, the following steps are further implemented:
the obtaining geometric vertex data according to the sliced text data includes:
parsing the sliced text data according to a preset parsing algorithm to obtain a plurality of pieces of instruction data in the sliced text data; and
obtaining the geometric vertex data according to the plurality of pieces of instruction data.

In one embodiment, when the computer program is executed by the processor, the following steps are further implemented:
filtering invalid instruction data in the plurality of pieces of instruction data to obtain valid instruction data; and
the obtaining the geometric vertex data according to the plurality of pieces of instruction data includes:
   obtaining the geometric vertex data according to the valid instruction data.

In one embodiment, when the computer program is executed by the processor, the following steps are further implemented:
determining whether the instruction data meets a preset invalid condition; and
determining that the instruction data is the invalid instruction data if the preset invalid condition is met; or
determining that the instruction data is the valid instruction data if the preset invalid condition is not met.

In one embodiment, when the computer program is executed by the processor, the following steps are further implemented:
the invalid condition includes at least one of the following:
determining that an extrusion output of a printer is zero according to the instruction data; and
determining that an offset of the printer is zero according to the instruction data.

In one embodiment, when the computer program is executed by the processor, the following steps are further implemented:
the obtaining the geometric vertex data according to the plurality of pieces of instruction data includes:
obtaining a plurality of vertex values according to the plurality of pieces of instruction data; and
constructing coordinates of geometric vertexes according to the vertex values to obtain the geometric vertex data.

In one embodiment, when the computer program is executed by the processor, the following steps are further implemented:
the preset geometric object parameter includes preset color data and/or preset transparency value data.

In one embodiment, when the computer program is executed by the processor, the following steps are further implemented:
obtaining preset line width data; and
determining the custom material according to the line width data.

In one embodiment, a computer-readable storage medium with a computer program stored thereon is provided, and when the computer program is executed by a processor, the following steps are implemented:
obtaining sliced text data;
obtaining geometric vertex data according to the sliced text data;
determining a geometric object according to the geometric vertex data and a preset geometric object parameter; and
rendering the geometric object by using a custom material to generate a to-be-printed model.

In one embodiment, when the computer program is executed by the processor, the following steps are implemented:
the obtaining geometric vertex data according to the sliced text data includes:
parsing the sliced text data according to a preset parsing algorithm to obtain a plurality of pieces of instruction data in the sliced text data; and
obtaining the geometric vertex data according to the plurality of pieces of instruction data.

In one embodiment, when the computer program is executed by the processor, the following steps are implemented:
filtering invalid instruction data in the plurality of pieces of instruction data to obtain valid instruction data; and
the obtaining the geometric vertex data according to the plurality of pieces of instruction data includes:
   obtaining the geometric vertex data according to the valid instruction data.

In one embodiment, when the computer program is executed by the processor, the following steps are implemented:
determining whether the instruction data meets a preset invalid condition; and
determining that the instruction data is the invalid instruction data if the preset invalid condition is met; or
determining that the instruction data is the valid instruction data if the preset invalid condition is not met.

In one embodiment, when the computer program is executed by the processor, the following steps are implemented:
the invalid condition includes at least one of the following:
determining that an extrusion output of a printer is zero according to the instruction data; and
determining that an offset of the printer is zero according to the instruction data.

In one embodiment, when the computer program is executed by the processor, the following steps are implemented:
the obtaining the geometric vertex data according to the plurality of pieces of instruction data includes:
obtaining a plurality of vertex values according to the plurality of pieces of instruction data; and
constructing coordinates of a geometric vertex according to the vertex values to obtain the geometric vertex data.

In one embodiment, when the computer program is executed by the processor, the following steps are implemented:
the preset geometric object parameter includes preset color data and/or preset transparency value data.

In one embodiment, when the computer program is executed by the processor, the following steps are implemented:
obtaining preset line width data; and
determining the custom material according to the line width data.

It should be noted that user information (including, but not limited to, a user's device information, a user's personal information, and the like) and data (including, but not limited to, data for analysis, stored data, displayed data, and the like) involved in the present application are information and data that are duly authorized by a user or each related party.

Those of ordinary skill in the art can understand that all or part of the processes in the methods of the above-described embodiments can be completed by instructing the relevant hardware through the compute program. The compute program can be stored in a non-volatile computer-readable storage medium and can include the processes of the embodiments of the above-described methods when executed. Here, any reference to a memory, database, or any other medium used in embodiments provided in the present application can include at least one of a non-volatile and a volatile memory. The non-volatile memory can include a read-only memory (ROM), a magnetic tape, a floppy disk, a flash memory, an optical memory, a high-density embedded non-volatile memory, a resistive random access memory (ReRAM), a magnetoresistive random access memory (MRAM), a ferroelectric random access memory (FRAM), a phase-change memory (PCM), a graphene memory, or the like. The volatile memory can include a random access memory (RAM) or an external cache memory. As an illustration rather than a limitation, RAM can be in a variety of forms, such as a static random access memory (SRAM) or a dynamic random access memory (DRAM). The database involved In embodiments of the present application can include at least one of a relational database or a non-relational database. The non-relational database can include a distributed database based on a block chain, or the like, which is not limited thereto. The processor involved In embodiments of the present application can be a general-purpose processor, a central processing unit, a graphics processor, a digital signal processor, a programmable logic device, a quantum computing-based data processing logic device, or the like, which is not limited thereto.

The technical features of the above embodiments can be combined in any way. To simplify the description, not all possible combinations of the technical features in the above embodiments are described. However, as long as there is no contradiction in the combinations of these technical features, all possible combinations should be considered to fall within the scope of the specification.

The above embodiments only express several implementation manners of the present application, and the description thereof is relatively specific and detailed but should not be construed as limiting the scope of the present application. It should be noted that, for those of ordinary skill in the art, several modifications and improvements can be made without departing from the concept of the present application and these modifications and improvements should all fall within the protection scope of the present application. Therefore, the protection scope of the present application shall be subject to the appended claims.

## Claims

1. A model generation method comprising:
obtaining sliced text data;
obtaining geometric vertex data according to the sliced text data;
determining a geometric object according to the geometric vertex data and a preset geometric object parameter; and
rendering the geometric object by using a custom material to generate a to-be-printed model.

2. The method of claim 1, **characterized in that** obtaining the geometric vertex data according to the sliced text data comprises:
parsing the sliced text data text data according to a preset parsing algorithm to obtain a plurality of pieces of instruction data in the sliced text data; and
obtaining the geometric vertex data according to the plurality of pieces of instruction data.

3. The method of claim 2, **characterized in that** the method further comprises:
filtering invalid instruction data in the plurality of pieces of instruction data to obtain valid instruction data; and
obtaining the geometric vertex data according to the plurality of pieces of instruction data comprises:
obtaining the geometric vertex data according to the valid instruction data.

4. The method of claim 3, further comprising:
determining whether the instruction data meets a preset invalid condition, **characterized in that**
determining that the instruction data is the invalid instruction data if the preset invalid condition is met, and
determining that the instruction data is the valid instruction data if the preset invalid condition is not met.

5. The method of claim 4, **characterized in that** the invalid condition comprises at least one of the following:
determining that an extrusion output of a printer is zero according to the instruction data; and
determining that an offset of the printer is zero according to the instruction data.

6. The method of claim 2, **characterized in that** obtaining the geometric vertex data according to the plurality of pieces of instruction data comprises:
obtaining a plurality of vertex values according to the plurality of pieces of instruction data; and
constructing coordinates of geometric vertexes according to the vertex values to obtain the geometric vertex data.

7. The method of claim 1, **characterized in that** the preset geometric object parameter comprises preset color data and/or preset transparency value data.

8. The method of claim 1, further comprising:
obtaining preset line width data; and
determining the custom material according to the line width data.

9. A model generation apparatus, **characterized in that** the model generation apparatus comprises:
a first obtaining module, configured to obtain sliced text data;
a second obtaining module, configured to obtain geometric vertex data according to the sliced text data;
a determination module, configured to determine a geometric object according to the geometric vertex data and a preset geometric object parameter; and
a generation module, configured to render the geometric object by using a custom material to generate a to-be-printed model.

10. A computer device comprising a memory and a processor, **characterized in that** the memory stores a computer program that, when the processor executes the computer program, the steps of the method according to any one of claims 1-8 are implemented

11. A computer-readable storage medium with a computer program stored thereon, **characterized in that** the computer program is executed by a processor to implement a model generation method according to any one of claims 1-8.
